(19) Europäisches Patentamt
European Patent Office
Office européen des brevets

(11) EP 1 146 708 A1

(12) EUROPÄISCHE PATENTANMELDUNG

(43) Veröffentlichungstag:
**17.10.2001 Patentblatt 2001/42**

(51) Int Cl.7: **H04L 27/26**, H04L 25/03, H04L 1/06, H04B 7/04

(21) Anmeldenummer: **00107868.2**

(22) Anmeldetag: **12.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Matzner, Rolf**
**80798 München (DE)**

(72) Erfinder: **Matzner, Rolf**
**80798 München (DE)**

(74) Vertreter: **Schurack, Eduard F. et al**
**Hofstetter, Schurack & Skora**
**Balanstrasse 57**
**81541 München (DE)**

# (54) Mehrträgerübertragungssystem unter Verwendung von MIMO-Kanälen

(57) Die vorliegende Erfindung betrifft ein System zur Übertragung mindestens eines Systems zur Übertragung mindestens eines digitalen Signals von einer Senderseite auf eine Empfängerseite, wobei die Senderseite über einen MIMO-Kanal mit m Eingängen und p Ausgängen mit der Empfängerseite verbunden ist und die mindestens zwei Ausgänge mit gemeinsamen Empfangsvorrichtungen beschaltet sind, wobei das mindestens eine zu übertragende digitale Signal Mehrträger-moduliert ist, sowie ein damit korrespondierendes Verfahren. Sie betrifft überdies einen entsprechend ausgelegten Sender sowie einen entsprechend ausgelegten Empfänger.

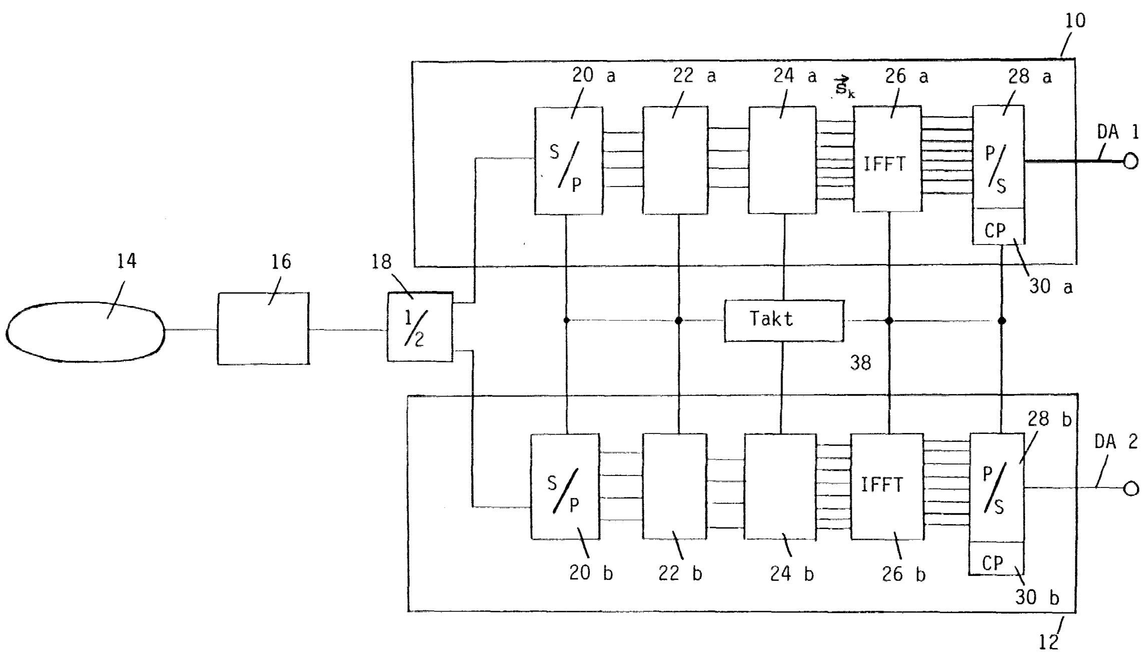


Fig. 1

EP 1 146 708 A1

Printed by Jouve, 75001 PARIS (FR)

## Beschreibung

Die vorliegende Erfindung betrifft ein System zur Übertragung mindestens eines digitalen Signals von einer Senderseite auf eine Empfängerseite, wobei die Senderseite über einen MIMO-Kanal mit m Eingängen und p Ausgängen mit der Empfängerseite verbunden ist und die mindestens zwei Ausgänge mit gemeinsamen Empfangsvorrichtungen beschaltet sind, sowie ein korrespondierendes Verfahren. Sie betrifft überdies einen speziell für dieses System ausgebildeten Sender sowie einen speziell ausgebildeten Empfänger.

Mit der Abkürzung MIMO (Multiple-Input Multiple-Output) werden Systeme oder Kanäle mit jeweils mehreren Ein- und Ausgängen bezeichnet. Die Ein- und Ausgangsgrößen werden häufig zu Vektoren zusammengefaßt. Aus dem Stand der Technik sind MIMO-Systeme mit DFE-Empfängern (DFE, Decision Feedback Equalization) bekannt, Siehe J. Yang und S. Roy: "Joint transmitter-receiver optimization for multi-input multi-output systems with decision feedback", erschienen in IEEE Trans. Inform. Theory, 1994, Volume IT-40, Number 5, Seiten 1334-1347, sowie A. Duel-Hallen: "Equalizers for multiple input/multiple output channels and PAM systems with cyclostationary input sequences", erschienen in IEEE J. Select. Areas Commun., 1992, Volume JSAC-10, Number 3, Seiten 630-639. Generell wird mit digitalen Modulationsverfahren die Umsetzung eines zeit- und im allgemeinen wertdiskreten Signals in ein zeit- und wertkontinuierliches elektrisches Signal bezeichnet. Man unterscheidet Basisbandverfahren, beispielsweise Pulsamplitudenmodulation, Einträgerverfahren, beispielsweise ASK (Amplitude Shift Keying) und Mehrträgerverfahren, beispielsweise OFDM (Orthogonal Frequency Division Multiplex).

Ein Teil eines derartigen Übertragungsverfahrens dient gewöhnlich der Entzerrung. Hierbei sollen zum einen die Verzerrungen der gesendeten Signals durch den Kanal selbst kompensiert werden, so daß einzelne elektrische Abtastwerte einzelnen digitalen Symbolen der wiedergewonnenen Nachricht zugeordnet werden können. Zum anderen hat ein Entzerrungsverfahren die zeitliche Störungsdekorrelation zu leisten, so daß die Störanteile zeitlich auseinanderliegender elektrischer Abtastwerte statistisch unkorreliert sind.

Die Entzerrung und Störungsdekorrelation findet bei der erwähnten DFE im Zeitbereich statt. Im Hinblick auf die Kanalkapazität ist die Entzerrung und Störungsdekorrelation durch DFE optimal.

Zurück zu den MIMO-Kanälen: Ein MIMO-Kanal ist gekennzeichnet durch m Eingänge, p Ausgänge und m*p lineare Übertragungsfunktionen $H_{ij}(f)$, die das Übertragungsverhalten des Kanals vom i-ten Eingang zum j-ten Ausgang beschreiben. Bei derartigen MIMO-Kanälen sind alle möglichen Übertragungswege von allen Eingängen zu allen Ausgängen gemeinsam zu entzerren. Zudem ist für statistische Unkorreliertheit der Störanteile sowohl im zeitlichen Sinne als auch im räumlichen Sinne, also zwischen den gleichzeitigen Störabtastwerten zweier Ausgänge des MIMO-Kanals, zu sorgen.

Nachteilig an der Erweiterung des DFE-Konzepts auf MIMO-Kanäle, siehe die oben erwähnten beiden Veröffentlichungen, ist der mit der Dimension des MIMO-Systems, d. h. der Anzahl der Ein- und Ausgänge, überproportional stark steigende Aufwand.

Der vorliegenden Erfindung liegt deshalb die Aufgabe zugrunde, ein System der eingangs genannten Art derart weiterzubilden, daß es eine Übertragung mindestens eines digitalen Signals bei gleicher Qualität, jedoch mit niedrigerem Aufwand ermöglicht als das bekannte DFE-Konzept.

Diese Aufgabe wird erfindungsgemäß dadurch gelöst, daß bei dem gattungsgemäßen System das mindestens eine zu übertragende digitale Signal Mehrträger-moduliert ist. Als Mehrträger-Modulation kommt insbesondere die diskrete Multitone-Modulation in Betracht (DMT, Discrete Multitone Modulation).

Die Erfindung basiert auf der Idee die Mehrträger-Modulation auf MIMO-Kanäle anzuwenden. Bei genügend großer Anzahl von Trägern ist zum einen jede Übertragungsfunktion $H_{ij}(f)$ im Bereich des Teilbandes des k-ten Trägers in ausreichender Näherung konstant, zum anderen das Leistungsdichtespektrum der wirksamen Störung im k-ten Teilband ebenfalls in ausreichender Nährung konstant und damit die Störung im k-ten Teilband nahezu statistisch unkorreliert. Dies ermöglicht die Beschränkung der Entzerrung einer jeden Übertragungsfunktion $H_{ij}(f)$ - im Sinne einer Frequenzbereichsentzerrung - auf die Multiplikation mit einem im allgemeinen komplexwertigen Skalar $1/H_{ij}(f_k)$, wobei $f_k$ ein Frequenzwert des k-ten Teilbandes ist.

Eine zeitliche Dekorrelation der Störung ist im Hinblick auf die obigen Ausführungen nicht erforderlich. Für die räumliche Dekorrelation der Störung kann der Störbeitrag am Eingang des i-ten Entscheiders, im folgenden auch Diskriminator genannt, durch lineare Kombination der Störbeiträge an den Eingängen der Entscheider 1 bis i - 1 geschätzt und kompensiert werden.

Gemäß einem weiteren Aspekt der Erfindung wird ein Sender zum Senden von digitalen Signalen mit den Merkmalen von Anspruch 2 vorgeschlagen, in dem das MIMO-Konzept mit der Mehrträgermodulation kombiniert ist. Hierbei werden m Moduliervorrichtungen, $m \geq 2$ verwendet, wobei mit jeder Moduliervorrichtung eine Anzahl von $n_i$ Trägerfrequenzen, $n_i \geq 2$, in Abhängigkeit eines von m digitalen Signalen modulierbar ist, ferner m Transformationsvorrichtungen, wobei mit jeder Transformationsvorrichtung eines der auf $n_i$ Träger modulierten Signale vom Frequenzbereich in den Zeitbereich transformierbar ist und weiterhin eine Sendevorrichtung, mit der die m Zeitbereichsignale in die n Eingänge eines MIMO-Kanals, $m \geq 2$, einspeisbar sind.

Zur Transformation vom Frequenzbereich in den Zeitbereich eignet sich beispielsweise besonders die inverse schnelle Fourier-Transformation (IFFT, Inverse Fast-Fourier-Transformation) oder auch das DWMT-Verfahren (Discrete Wavelet Multitone).

Bei einer besonders vorteilhaften Ausführungsform sind die m Transformationsvorrichtungen durch einen gemeinsamen Takt synchronisiert.

Gemäß einem weiteren Aspekt der Erfindung wird ein Empfänger zum Empfangen von digitalen Signalen mit den Merkmalen von Anspruch 4 vorgeschlagen, der auf die Kombination des MIMO-Konzepts mit einer Mehrträgermodulation der digitalen Daten ausgelegt ist. Dementsprechend sind eine Anzahl von $n_i$ Trägerfrequenzen, $n_i \geq 2$, in Abhängigkeit jedes digitalen Signals moduliert und die empfangenen Signale sind im Zeitbereich repräsentiert. Der Empfänger verfügt über eine Empfangsvorrichtung die an den p Ausgängen eines MIMO-Kanals mit m Eingängen angeschlossen ist, wobei der MIMO-Kanal durch je eine Übertragungsfunktion von jedem der m Eingänge auf jeden der p Ausgänge beschreibbar ist. Weiterhin weist der Empfänger p Rücktransformationsvorrichtungen auf, wobei mit jeder Rücktransformationsvorrichtung eines der auf $n_i$ Träger modulierten Signale vom Zeitbereich in den Frequenzbereich transformierbar ist, eine Frequenzbereichentzerrungsvorrichtung mit p Eingängen und m Ausgängen, die eine zumindest teilweise Kompensation der Verzerrung durch die Übertragungsfunktion jedes der m Eingänge auf die p Ausgänge des MIMO-Kanals ermöglicht, sowie m Parallel-Seriell-Wandler, mit denen jedes der Ausgangssignale der Frequenzbereichsentzerrungsvorrichtung in ein serielles Signal umwandelbar ist.

Grundsätzlich bietet ein MIMO-Empfänger den Vorteil einer höheren Transinformation, wobei unter Transinformation die über einen Kanal übertragbare Bitrate zu verstehen ist. Dies hat folgende Ursachen: Zum einen wirkt das Übersprechen benachbarter Adern im Kanal nicht als stochastische Störung, sondern kann deterministisch kompensiert werden. Weiterhin geht die übersprechende Leistung nicht verloren, sondern wird durch einen Frequenzbereichsentzerrer in den Nutzsignalpfad konstruktiv zurückgeführt. Schließlich ermöglicht die räumliche Dekorrelation der Störung eine signifikante Verminderung der am Eingang eines Diskriminators wirksamen Störleistung.

Durch die Kombination eines Mehrträgerverfahrens mit einem MIMO-Kanal ergeben sich folgende Vorteile: Für eine einzelne Übertragungsleitung, eine sogenannte SISO-Leitung (single-in single-out) sind Vielträgerverfahren wegen der Transformation vom Frequenzbereich in den Zeitbereich auf der Senderseite beziehungsweise der Transformation vom Zeitbereich in den Frequenzbereich auf der Empfängerseite aufwendiger als Zeitbereichsentzerrer, wie zum Beispiel das erwähnte DFE. Jedoch ist bei einem m-dimensionalen MIMO-Mehrträgersystem der Aufwand für die erwähnten Transformationen identisch wie bei m-eindimensionalen Mehrträgersystemen. Ein MIMO-Frequenzbereichsentzerrer und eine räumliche Störungsdekorrelation lassen sich somit durch einfache Multiplikationen realisieren. Im Vergleich zur Kombination aus MIMO-Kanal und DFE-Konzept läßt sich bei der Kombination aus MIMO-Kanal und Mehrträgermodulation eine erheblich höhere Transinformation erreichen bei vertretbar steigendem Aufwand.

Besonders vorteilhaft ist dazu die Bandbreite jeder modulierten Trägerfrequenz derart bemessen, daß die Übertragungsfunktion für jede Trägerfrequenz näherungsweise als komplexwertige Konstante beschreibbar ist.

Ein erfindungsgemäßer Empfänger weist zweckmäßigerweise m Entscheidungsvorrichtungen auf, mit denen die Ausgangssignale der Frequenzbereichsentzerrungsvorrichtung vorbestimmten Amplitudenwerten zuordenbar sind.

Besonders vorteilhaft ist es, den erfindungsgemäßen Empfänger. um eine Störungsdekorrelationsvorrichtung mit m Eingängen zu erweitern, wobei der Störanteil im i-ten Signal geschätzt und gewichtet auf die Signal i + 1 bis n addiert wird.

Zur Schätzung der Störanteile können m Schätzungvorrichtungen vorgesehen sein, mit denen der Störanteil im i-ten Signal dadurch schätzbar ist, daß das Ausgangssignal vom Eingangssignal der zugehörigen Entscheidungsvorrichtung zum Erhalt des Schätzwerts subtrahiert wird.

Die Erfindung betrifft weiterhin ein mit dem obenbezeichneten erfindungsgemäßen System korreliertes Verfahren zur Übertragung mindestens eines digitalen Signals.

Weitere vorteilhafte Ausführungsformen können den Unteransprüchen entnommen werden. Im Nachfolgenden wird ein Ausführungsbeispiel unter Hinweis auf die beigefügten Zeichnungen näher beschrieben. Es stellen dar:

Fig. 1 in schematischer Darstellung eine Ausführungsform eines erfindungsgemäßen Senders;

Fig. 2 in schematischer Darstellung das Frontend eines erfindungsgemäßen Empfängers;

Fig. 3 in schematischer Darstellung einen Teilbereich einer besonders bevorzugten Ausführungsform eines erfindungsgemäßen Empfängers; und

Fig. 4 in schematischer Darstellung einen Teilbereich einer weiteren bevorzugten Ausführungsform eines erfindungsgemäßen Empfängers.

Figur 1 zeigt einen erfindungsgemäßen Sender. Ein Kabelbündel mit zwei Doppeladern DA1, DA2 läßt sich als linear verzerrender MIMO-Kanal mit m = 2 Eingängen und p = 2 Ausgängen beschreiben. Die

Übertragungsfunktionen von Eingang i zu Ausgang k werden mit $H_{ik}(f)$ bezeichnet. Sie lassen sich in einer Übertragungsmatrix

$$\mathbf{H}(f) = \begin{pmatrix} H_{11}(f) & H_{12}(f) \\ H_{21}(f) & H_{22}(f) \end{pmatrix}$$

zusammenfassen.

Als Mehrträgermodulierverfahren wird im vorliegenden Ausführungsbeispiel das DMT-Verfahren verwendet. Der Sender besteht aus zwei gleichartigen DMT-Sendern 10, 12 mit $n_i$ Trägerfrequenzen ("Tönen"). Die von einer Nachrichtenquelle 14 erzeugte Nachricht wird zunächst in einem Binärkodierer 16 in binäre Form gewandelt. Die daraus entstandenen einzelnen Bits werden dann in einem Demultiplexer 18 auf die zwei DMT-Sender 10, 12 verteilt. In jedem DMT-Sender werden die Daten zunächst in einem Seriell-Parallel-Wandler 20a, 20b in parallele Form gebracht und dann in einem TO- (Tone Ordering) Block 22a, 22b auf die einzelnen Trägerfrequenzen verteilt. In einem Mapping-Block 24a, 24b wird durch die $b_{i,k}$ Bits, die dem k-ten Ton des i-ten DMT-Senders zugeteilt sind, einer von $2^{b_{i,k}}$ Signalpunkten einer zweidimensionalen Signalkonstellation ausgewählt (Mapping = Abbilden). Die Signalpunkte der zweidimensionalen Signalkonstellation werden dabei durch komplexe Zahlen beschrieben. Der ausgewählte Signalpunkt $S_{i,k}$ und seine konjugiert komplexe $s^*_{i,k}$ dienen als Eingänge in eine N Punkte inverse Fast-Fourier-Transformation, siehe IFFT-Block 26a, 26b. Der N-dimensionale Ausgangsvektor der inversen Fast-Fourier-Transformation des i-ten DMT-Senders wird anschließend in einem P/S-Block 28a, 28b parallel-seriell gewandelt und über die i-te Doppelader DA1, DA2 übertragen. Der N-dimensionale Ausgangsvektor der IFFT kann vor der Parallel-Seriell-Wandlung in einem CP-Block 30a, 30b mit einem sogenannten Cyclic Prefix versehen werden, das einfach die n letzten Werte des Vektors diesem noch einmal voranstellt. Damit wirkt das Sendesignal periodisch.

Figur 2 zeigt das Frontend eines erfindungsgemäßen Empfängers. An jede der m Doppeladern des Kabels sind gleichartige Empfangsvorrichtungen angeschlossen, deren Aufbau zunächst dem bekannter DMT-Empfänger entspricht. Das i-te Empfangssignal wird in einem Block 32a, 32b seriell-parallel gewandelt, ein gegebenenfalls vorhandenes Cyclic Prefix verworfen. Die N verbleibenenden Abtastwerte dienen als Eingang in eine N Punkte Fast-Fourier-Transformation in einem FFT-Block 34a, 34b. Die Hälfte der N Ausgangswerte der Fast-Fourier-Transformation korrespondiert bis auf die Verzerrungen des Kanals mit den gesendeten Amplitudenkoeffizienten, die andere Hälte ist konjugiert komplex zur ersten Hälfte und kann verworfen werden. An die Fast-Fourier-Transformation schließt sich die Frequenzbereichsentzerrung an.

Wenn $r_{1,k}$ der Ausgangswert des k-ten Tons der FFT des ersten Empfängers, $s_{1,k}$ der entsprechende gesendete Amplitudenkoeffizient des Senders 10, und $s_{2,k}$ der entsprechende gesendete Wert des Senders 12 ist, dann gilt in guter Näherung:

$$r_{1,k} = s_{1,k}H_{11}(f = f_k) + s_{2,k}H_{21}(f = f_k)$$

$f_k$ ist dabei die Frequenz des k-ten Tons. Die Näherung ist umso besser, je enger der Abstand benachbarter Töne im Vergleich zur Änderung der Übertragungsfunktionen $H_{ij}(f)$ im Bereich des halben Abstand ist. Faßt man jeweils die Ausgangssignale der k-ten Töne aller m FFTs zu einem Zeilenvektor $\vec{r_k}$ zusammen, und entsprechend die gesendeten Amplitudenkoeffizienten zu $\vec{s_k}$, so gilt:

$$\vec{r_k} = \vec{s_k}\mathrm{H}(f = f_k)$$

Die verzerrende Wirkung des MIMO-Kanals läßt sich also durch Multiplikation mit der inversen Übertragungsmatrix kompensieren:

$$\vec{s_k}\mathrm{H}(f = f_k)\mathrm{H}^{-1}(f = f_k) = \vec{s_k}$$

Figur 3 zeigt die schaltungstechnische Realisierung der Multiplikation mit der inversen Übertragungsmatrix in einem Frequenzbereichsentzerrer 40. Die komplexen Gewichte $b_{ik}$ sind die Elemente der Inversen der Übertragungsmatrix an der Stelle des k-ten Tons:

$$\mathbf{b}_k = \begin{pmatrix} b_{11,k} & b_{12,k} \\ b_{21,k} & b_{22,k} \end{pmatrix} = \mathbf{H}^{-1}(f = f_k)$$

Im Hinblick auf die Dekorrelation kann davon ausgegangen werden, daß die m Ausgangssignale des MIMO-Kanals additiv durch m untereinander korrelierte, farbige Störsignale gestört werden. Auf die Signale $r_{ik}$ wirkt dies als additiv überlagerte - näherungsweise - weiße Störung $n_{i,k}$, wobei $n_{i,k}$ und $n_{j,1}$ korreliert sind für $i \neq j$ und $k = 1$ und unkorreliert sind für $i = j$ und $k \neq 1$ ("räumliche Korrelation").

Die Korrelationseigenschaften des Störvektors $\vec{n_k}$ werden beschrieben durch die Korrelationsmatrix

$$\mathrm{R}_k = (E\{n_{i,k}n_{j,k}\})_{ij},$$

wobei E {.} den Erwartungswertoperator bezeichnet. $R_k$ kann in eine obere rechte Dreiecksmatrix d faktorisiert werden, so daß gilt:

$$R_k = d^T d^*$$

$d^T$ bezeichnet die Transponierte, $d^*$ die komplex konjugierte Matrix zu d.

Die wirksame Störleistung am Eingang eines Diskriminators 36a, 36b wird durch räumliche Störungsdekorrelation reduziert. Dazu werden vom Eingang des i-ten Detektors die mit $d_{j,k}$ gewichteten geschätzten Störwerte $\hat{n}_{j,k}$ der Empfänger j = 1 bis i - 1 subtrahiert, in Figur 3 nicht dargestellt.

Figur 4 zeigt die Störungsdekorrelation für einen Empfänger mit m = 3 und entsprechend drei Diskriminatoren 36 a, 36 b, 36 c in einem Frequenzbereichsentzerrer 42. Der Schätzwert $\hat{n}_{i,k}$ wird durch Differenzbildung von Eingang und Ausgang eines Diskriminators 36 a, 36 b, 36 c gewonnen, der wertkontinuierliche Eingangswerte den möglichen, diskreten Amplitudenkoeffizienten der Signalkonstellation des jeweiligen Tons zuordnet.

Das obige Ausführungsbeispiel wurde am Beispiel der DMT als Vielträgerverfahren dargestellt. Andere für die Erfindung in Betracht kommende Vielträgerverfahren sind beispielsweise DWMT (Discrete Wavelet Multitone), OFDM (Orthogonal Frequency Division Multiplex).

**Patentansprüche**

1. System zur Übertragung mindestens eines digitalen Signals von einer Senderseite auf eine Empfängerseite, wobei die Senderseite über einen MIMO-Kanal mit m Eingängen und p Ausgängen mit der Empfängerseite verbunden ist und die mindestens zwei Ausgänge mit gemeinsamen Empfangsvorrichtungen beschaltet sind,
   **dadurch gekennzeichnet,**
   **daß** das mindestens eine zu übertragende digitale Signal Mehrträger-moduliert ist.

2. Sender zum Senden von digitalen Signalen, mit

   - m Moduliervorrichtungen (22 a, 22 b), $m \geq 2$, wobei mit jeder Moduliervorrichtung eine Anzahl von $n_i$ Trägerfrequenzen, $n_i \geq 2$, in Abhängigkeit eines von m digitalen Signalen modulierbar ist;
   - m Transformationsvorrichtungen (26 a, 26 b), wobei mit jeder Transformationsvorrichtung eines der auf $n_i$ Träger modulierten Signale vom Frequenzbereich in den Zeitbereich transformierbar ist; und
   - einer Sendevorrichtung (28 a, 28 b), mit der die m Zeitbereichssignale in die m Eingänge eines MIMOKanals, $m \geq 2$, einspeisbar sind.

3. Sender nach Anspruch 2,
   **dadurch gekennzeichnet,**
   **daß** die m Transformationsvorrichtungen (26 a, 26 b) durch einen gemeinsamen Takt (38) synchronisiert sind.

4. Empfänger zum Empfangen von digitalen Signalen, wobei in Abhängigkeit jedes digitalen Signals eine Anzahl von $n_i$ Trägerfrequenzen, $n_i \geq 2$, moduliert ist und die empfangenen Signale im Zeitbereich repräsentiert sind, mit

   - einer Empfangsvorrichtung (32 a, 32 b), die an den p Ausgängen eines MIMO-Kanals mit m Eingängen, $m \geq 2$, angeschlossen ist, wobei der MIMO-Kanal durch je eine Übertragungsfunktion von jedem der m Eingänge auf jeden der p Ausgänge beschreibbar ist,
   - p Rücktransformationsvorrichtungen (34 a, 34 b), wobei mit jeder Rücktransformationsvorrichtung eines der auf $n_i$ Träger modulierten Signale vom Zeitbereich in den Frequenzbereich transformierbar ist;
   - einer Frequenzbereichsentzerrungsvorrichtung (40; 42) mit p Eingängen und m Ausgängen, die eine zumindest teilweise Kompensation der Verzerrung durch die Übertragungsfunktion jedes der m Eingänge auf die p Ausgänge des MIMO-Kanals ermöglicht;
   - m Parallel-Seriell-Wandler, mit denen jedes der Ausgangssignale der Frequenzbereichsentzerrungsvorrichtung in ein serielles Signal umwandelbar ist.

5. Empfänger nach Anspruch 4,
   **dadurch gekennzeichnet,**
   **daß** die Bandbreite jeder modulierten Trägerfrequenz derart bemessen ist, daß die Übertragungsfunktion für jede Trägerfrequenz näherungsweise als komplexwertige Konstante beschreibbar ist.

6. Empfänger nach einem der Ansprüche 4 oder 5,
   **dadurch gekennzeichnet,**
   **daß** er weiterhin umfaßt:
   m Entscheidungsvorrichtungen (36 a, 36 b, 36 c), mit denen die Ausgangssignale der Frequenzbereichsentzerrungsvorrichtung (40; 42) vorbestimmten Amplitudenwerten zuordenbar sind.

7. Empfänger nach einem der Ansprüche 4 bis 6,
   **dadurch gekennzeichnet,**
   **daß** er weiterhin umfaßt:
   eine Störungsdekorrelationsvorrichtung (42) mit m Eingängen, wobei der Störanteil im i-ten Signal geschätzt und gewichtet auf die Signale i+1 bis n addiert wird.

8. Empfänger nach Anspruch 7 in Rückbezug auf Anspruch 6,

**dadurch gekennzeichnet,**
**daß** sie weiterhin umfaßt:
m Schätzvorrichtungen, mit denen der Störanteil im i-ten Signal dadurch schätzbar ist, daß das Ausgangssignal vom Eingangssignal der zugehörigen Entscheidungsvorrichtung (36 a, 36 b, 36 c) zum Erhalt des Schätzwerts subtrahiert wird.

**9.** System nach Anspruch 1,
**dadurch gekennzeichnet,**
**daß** es auf der Senderseite einen Sender nach einem der Ansprüche 2 bis 3 und/oder auf der Empfängerseite einen Empfänger nach einem der Ansprüche 4 bis 8 umfaßt.

**10.** Verfahren zur Übertragung mindestens eines digitalen Signals von einer Senderseite auf eine Empfängerseite, wobei die Senderseite über einen MIMO-Kanal mit m Eingängen und p Ausgängen mit der Empfängerseite verbunden ist und die mindestens zwei Ausgänge mit gemeinsamen Empfangsvorrichtungen beschaltet sind,
**dadurch gekennzeichnet,**
**daß** das mindestens eine zu übertragende digitale Signal senderseitig einer Mehrträger-Modulation unterzogen wird.

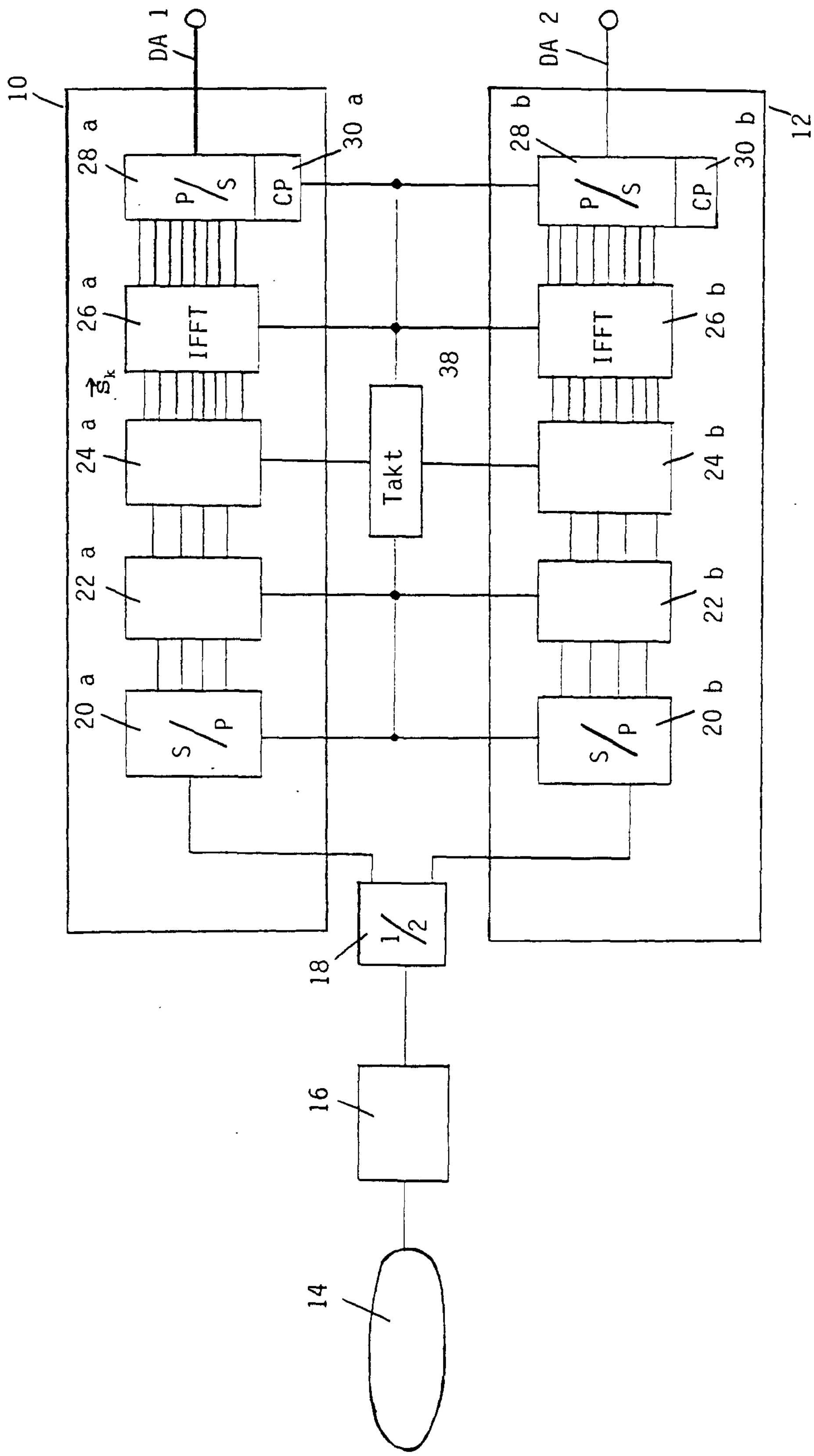
DA 1
DA 2
10
12
28 a
28 b
30 a
30 b
P/S
CP
26 a
26 b
IFFT
38
24 a
24 b
Takt
22 a
22 b
20 a
20 b
S/P
1/2
18
16
14

Fig. 1

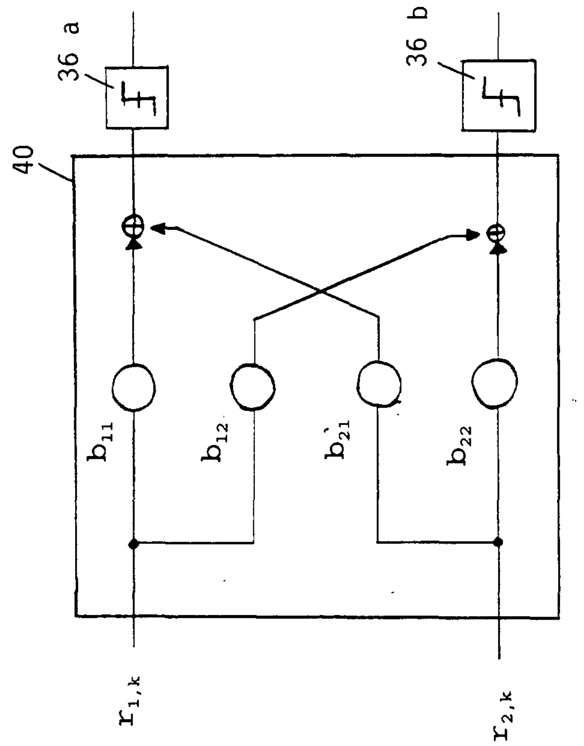
36 a
36 b
40
$b_{11}$
$b_{12}$
$b_{21}$
$b_{22}$
$r_{1,k}$
$r_{2,k}$

Fig. 3

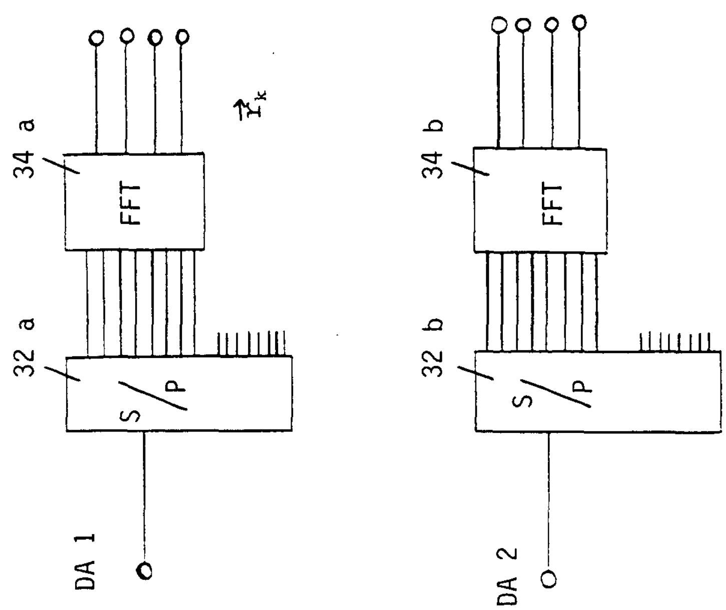
34 a
34 b
32 a
32 b
FFT
FFT
S/P
S/P
DA 1
DA 2
$\vec{r}_k$

Fig. 2

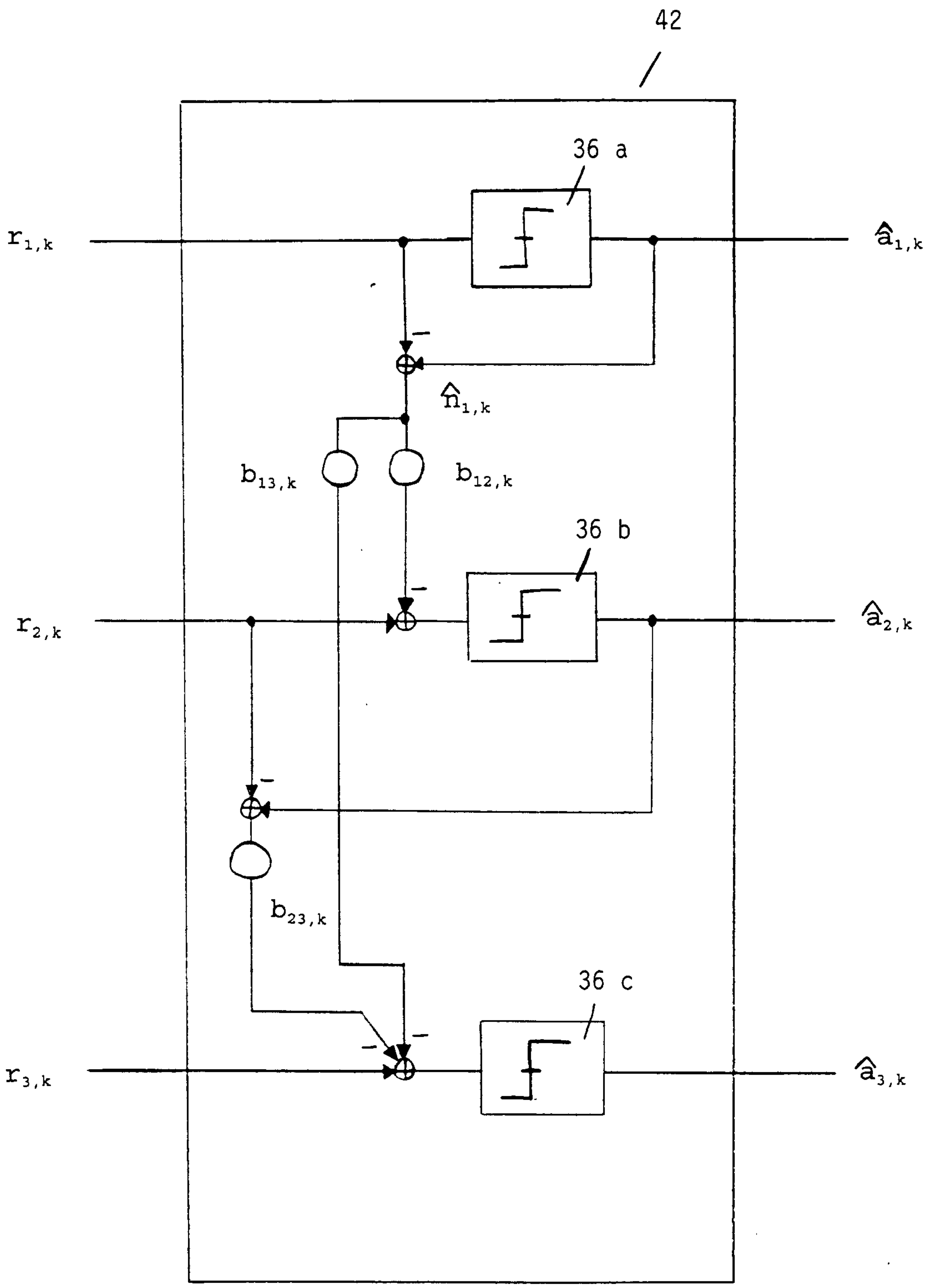
42
36 a
$r_{1,k}$
$\hat{a}_{1,k}$
$\hat{n}_{1,k}$
$b_{13,k}$
$b_{12,k}$
36 b
$r_{2,k}$
$\hat{a}_{2,k}$
$b_{23,k}$
36 c
$r_{3,k}$
$\hat{a}_{3,k}$

Fig. 4

Europäisches Patentamt

# EUROPÄISCHER RECHERCHENBERICHT

Nummer der Anmeldung
EP 00 10 7868

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| X | US 5 867 478 A (BAUM KEVIN LYNN ET AL) 2. Februar 1999 (1999-02-02)<br>* Zusammenfassung *<br>* Spalte 3, Zeile 54 - Spalte 5, Zeile 32 *<br>* Spalte 15, Zeile 47 - Spalte 17, Zeile 7 *<br>* Spalte 23, Zeile 14 - Zeile 35 *<br>* Spalte 25, Zeile 34 - Zeile 59 *<br>* Abbildungen 2,14-17 *<br>--- | 1-3,9,10 | H04L27/26<br>H04L25/03<br>H04L1/06<br>H04B7/04 |
| X | WO 98 09381 A (UNIV LELAND STANFORD JUNIOR) 5. März 1998 (1998-03-05)<br>* Zusammenfassung *<br>* Seite 9, Zeile 23 - Seite 18, Zeile 23 *<br>* Abbildung 7 *<br>--- | 1,10 | |
| A | KADEL G: "DIVERSITY AND EQUALIZATION IN FREQUENCY DOMAIN - A ROBUST AND FLEXIBLE RECEIVER TECHNOLOGY FOR BROADBAND MOBILE COMMUNICATION SYSTEMS"<br>IEEE VEHICULAR TECHNOLOGY CONFERENCE,US,NEW YORK, IEEE,<br>Bd. CONF. 47, 4. Mai 1997 (1997-05-04), Seiten 894-898, XP000736737<br>ISBN: 0-7803-3660-7<br>* das ganze Dokument *<br>----- | 1-10 | RECHERCHIERTE SACHGEBIETE (Int.Cl.7)<br>H04L<br>H04B |

Der vorliegende Recherchenbericht wurde für alle Patentansprüche erstellt

| Recherchenort | Abschlußdatum der Recherche | Prüfer |
|---|---|---|
| DEN HAAG | 19. September 2000 | Toumpoulidis, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 00 10 7868

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2000

| Im Recherchenbericht angeführtes Patentdokument | Datum der Veröffentlichung | Mitglied(er) der Patentfamilie | Datum der Veröffentlichung |
|---|---|---|---|
| US 5867478 A | 02-02-1999 | EP 0983654 A | 08-03-2000 |
| | | WO 9859450 A | 30-12-1998 |
| WO 9809381 A | 05-03-1998 | AU 4238697 A | 19-03-1998 |
| | | EP 0920738 A | 09-06-1999 |
| | | EP 0931388 A | 28-07-1999 |
| | | WO 9809385 A | 05-03-1998 |
| | | WO 9809395 A | 05-03-1998 |

EPO FORM P0461

Für nähere Einzelheiten zu diesem Anhang : siehe Amtsblatt des Europäischen Patentamts, Nr.12/82